Europäisches Patentamt

European Patent Office

Office européen des brevets

(19)

(11) Veröffentlichungsnummer : **0 127 021**
**B1**

(12)             EUROPÄISCHE PATENTSCHRIFT

(45) Veröffentlichungstag der Patentschrift :
06.05.87

(51) Int. Cl.⁴ : **F 16 B 43/00**

(21) Anmeldenummer : 84105168.3

(22) Anmeldetag : 08.05.84

(54) **Plattenförmige Distanzscheibe.**

(30) Priorität : 31.05.83 DE 3319661

(43) Veröffentlichungstag der Anmeldung :
05.12.84 Patentblatt 84/49

(45) Bekanntmachung des Hinweises auf die Patenterteilung : 06.05.87 Patentblatt 87/19

(84) Benannte Vertragsstaaten :
AT BE CH DE FR GB IT LI LU NL

(56) Entgegenhaltungen :
DE-U- 8 022 164
US-A- 1 780 839
US-A- 2 278 708
US-A- 2 584 873
US-A- 3 221 847
PATENT ABSTRACTS OF JAPAN, Band 1, Nr. 46, 6.
Mai 1977, Seite 37M77;

(73) Patentinhaber : Niemann, Hans-Dieter
Am Hügel 17
D-5014 Kerpen-Horrem (DE)

(72) Erfinder : Niemann, Hans-Dieter
Am Hügel 17
D-5014 Kerpen-Horrem (DE)

(74) Vertreter : Sturies, Herbert et al
Patentanwälte Dr. Ing. Dipl. Phys. Herbert Sturies
Dipl. Ing. Peter Eichler Postfach 20 12 42
D-5600 Wuppertal 2 (DE)

## Beschreibung

Die Erfindung bezieht sich auf eine plattenförmige ebene Distanzscheibe für die Bauindustrie, mit einem einseitig offenen Schlitz, der sich von seinem offenen Schlitzanfang bis über den Plattenmittelpunkt hinaus erstreckt und mit seinem Schlitzende eine Befestigungsschraube od. dgl. klemmfrei umgreift.

Beim Fenstereinbau, beim Innenausbau und auch bei Dachdeckerarbeiten besteht häufig das Problem, im Bereich von Befestigungsmitteln Distanzklötze verwenden zu müssen. Beim Fenstereinbau wird beispielsweise der Blendrahmen am Mauerwerk verschraubt. Ist zwischen beiden Luft und würden die Befestigungsschrauben ohne die Verwendung eines Distanzklotzes angezogen, so ergäbe sich kein definierter Sitz des Blendrahmenschenkels am Mauerwerk. Es ist daher allgemein bekannt, die Distanz zwischen dem Mauerwerk und dem Blendrahmenschenkel durch einen Distanzklotz zu überbrücken, der auf einer Seite einer Befestigungsschraube beigelegt wird. Auch die Verwendung von Keilen ist für diese Fälle bekannt, insbesondere wenn das Fenster zusätzlich ausgerichtet werden soll. Es hat sich jedoch zunehmend gezeigt, daß bei dieser Art der Distanzüberbrückung bzw. Ausrichtung bei Fenstern wegen der Einseitigkeit der Abstützung bzw. der bei der Verwendung von Keilen auftretenden Verwindung Nachteile vorhanden sind, die sich auf die Dauerhaltbarkeit der Fenster bei schwachen Profilen oder bei nicht geeignetem Werkstoff der Fensterrahmen auswirken. Das ist insbesondere bei aus Kunststoff bestehenden Fensterrahmen der Fall. Kunststoffensterrahmen sind in gewissen Ausführungen im Vergleich zu Holzfensterrahmen nicht in sich stabil. Der Werkstoff verkraftet nicht das Verziehen des Blendrahmenschenkels, wenn nur einseitig ein Distanzklotz beigelegt wird und er verwindet sich, wenn ein Beilagekeil verwendet wird. Auch können miteinander verschweißte Ecken des Fensterrahmens reißen, insbesondere wenn sie bei ihrer Herstellung zur Entfernung von Schweißresten bzw. Überständen mit einem Beitel bearbeitet wurden.

Entsprechendes gilt auch beim Innenausbau bzw. im Fassadenbau, wenn insbesondere Kunststoff verwendet wird. Auch hier werden herkömmlicherweise im Prinzip nicht optimale Distanzklötze verwendet. Ebenso im Dachdeckerbereich, wenn ebene bzw. in einer Flucht liegende Lattenflächen für Dach- und/oder Fassadenschindeln erstellt werden müssen.

Aus DE-U-69 16 301 ist bereits eine Distanzscheibe der eingangs genannten Art bekannt, die zur Überbrückung des Abstands eines Türfutters von einem Mauerwerk über den Hals eines Stehbolzens geschoben wird, dessen eines Ende mit einer Befestigungsplatte am Türfutter befestigt ist und dessen anderes Ende mit einem Kopf in eine am Mauerwerk befestigte Halteschiene eingreift. Dabei ist die Anordnung des Schlitzes der bekannten Distanzscheibe waagerecht und der Hals des Stehbolzens liegt entsprechend der Relativlage zwischen Türfutter und Mauer irgendwo zwischen Schlitzanfang und -ende. Die bekannte Distanzscheibe kann daher ohne weiteres verlorengehen, also vom Hals des Stehbolzens abrutschen und herunterfallen, falls sie nicht von der Halteschiene gehalten wird, während das Türfutter relativ zur Mauer ausgerichtet wird und Erschütterungen auf die Distanzscheibe einwirken.

Demgegenüber liegt der Erfindung die Aufgabe zugrunde, eine Distanzscheibe der eingangs genannten Art so zu verbessern, daß sie insbesondere beim Fenstereinbau und beim Ausbau des Hauses innen und außen nicht von einer Befestigungsschraube oder dgl. herunterrutschen kann.

Diese Aufgabe wird dadurch gelöst, daß die aus Kunststoff bestehende Distanzscheibe mindestens einen elastischen Haltevorsprung aufweist, der in den Schlitz hineinragt und mit die Klemmfreiheit der Befestigungsschraube gewährendem Abstand vor dem Schlitzende angeordnet ist.

Eine aus Kunststoff bestehende Distanzscheibe ist insbesondere für den Bau geeignet, da sie unverrottbar ist und damit dauerhaft die gewünschte Distanzüberbrückung gewährleistet. Daß ihre verwendbare Schlitzlänge größer ist, als die Entfernung des Plattenschwerpunkts vom Schlitzanfang, macht sie besonders für beengte Raumverhältnisse geeignet. Wird sie nämlich mit dem Schlitz soweit über das Befestigungsmittel geschoben, beispielsweise eine Befestigungsschraube, daß sich diese vom Schlitzanfang gesehen jenseits des Plattenschwerpunkts befindet, so kann die Distanzscheibe nicht mehr von der Befestigungsschraube herabgleiten, sondern hält sich bei vertikalem Schlitz bis zum Anziehen der Schraube selbsttätig in Montagelage. Dadurch vereinfacht die Distanzscheibe auch den Einbau eines Fensters bzw. die Befestigung des in Distanz anzuordneten Teils an einem anderem Teil. Außerdem kann vermieden werden, daß Distanzscheiben in Einbaubereiche fallen, wo sie unerwünscht sind bzw. stören und wegen ungünstiger Platzverhältnisse möglicherweise nur mühsam wieder hervorgeholt werden können.

Eine Distanzscheibe mit Schlitz ist als Metallscheibe allgemein bekannt. Sie wird als Metallbau-Konstruktionselement z. B. dort verwendet, wo große Befestigungskräfte auftreten. Ihre Verwendung im Bau ist nicht möglich. Sie ist wegen der hier stets vorhandenen Feuchtigkeit korrosionsanfällig, was sich störend auswirken kann und ist zu schwer, da sie wegen der geringen spezifischen Belastbarkeit der Materialien der auf Distanz zu haltenden Teile vergleichsweise groß sein muß. Bei vertikaler Anordnung kann sie erfahrungsgemäß leicht verloren gehen. Demgegenüber sind aus Kunststoff bestehende Distanzscheiben gemäß der Erfindung vergleichsweise leicht und dementsprechend auch einfach zu handhaben. Das fast allseitige Umgreifen der Befestigungsschraube verhindert, daß sich der Blendrahmenschenkel verziehen bzw. verwinden kann. Die Distanzscheibe kann genügend großflächig gemacht werden und mit ihrem Außenumfang auch speziellen Verwendungszwecken angepaßt werden, z. B. an den Einbau in eine Nut oder an die Verwendung in Verbindung mit einer stegartigen Anlagefläche, deren Seitenabmessungen nicht überschritten werden dürfen.

Um die Distanzscheibe auch in denjenigen Einsatzbereichen verwenden zu können, in denen die Lagesicherung der Distanzscheibe auf einer Befestigungsschrauben durch Schwerkraft nicht möglich, nicht ausreichend oder nicht sicher genug ist, weist die Distanzscheibe mindestens einen in den Schlitz hineinragenden Haltevorsprung auf. Dieser Haltevorsprung bewirkt die zusätzliche oder alleinige Lagesicherung der Distanzscheibe. Diese kann mithin also auch dann verwendet werden, wenn beispielsweise Relativbewegungen zwischen den auf Distanz zu haltenden Flächen stattfinden, oder wenn Schlag- oder Stoßbeanspruchungen oder andere in die Nähe der Befestigungsstelle einzubringende Einbauteile vorhanden sind, so daß die alleinige Lagesicherung durch Schwerkraft problematisch werden könnte.

Bei der Erfindung sind der oder die Haltevorsprünge mit Abstand vor dem Schlitzende angeordnet und bilden so zwischen sich und dem Schlitzende einen Freiraum, in dem sich das Befestigungsmittel bzw. die Befestigungsschraube befindet. Infolgedessen kann die Distanzscheibe auf der Schraube bewegt werden, ohne daß sie dabei ohne weiteres herabfallen kann. Es ist aber auch möglich, daß der oder die Haltevorsprünge als punktweise oder sich im wesentlichen über die gesamte Schlitzlänge erstreckende Klemmstellen ausgebildet sind. Eine derartige Ausbildung der Haltevorsprünge als Klemmstellen gewährleistet ebenfalls einen unverlierbaren Sitz der Distanzscheibe auf der Befestigungsschraube bzw. auf einem Befestigungsmittel und hat darüber hinaus den Vorteil, daß die Distanzscheibe in einer ganz bestimmten Lage relativ zu einem oder zu beiden der auf Distanz zu haltenden Bauteile anzuordnen ist.

Eine besonders einfache Ausbildung der Distanzscheibe erhält man, wenn der oder die Haltevorsprünge einstückig mit der Distanzscheibe an den Schlitzkanten angeordnet sind. Es ist dann ein nur geringer Herstellungsaufwand erforderlich, was die Distanzscheibe für den Masseneinsatz geeignet macht.

In Ausgestaltung der Erfindung sind der oder die Haltevorsprünge Federzungen, die beim Aufschieben der Distanzscheibe auf die Befestigungsschraube in Ausnehmungen zurückfedern, die in den Schlitzkanten vorhanden sind. Infolgedessen können Schlitzweiten verwendet werden, die gerade ebenso groß sind, wie der Schraubendurchmesser. Die als Federzungen ausgebildeten Haltevorsprünge verschließen den Schlitz zumindest nahezu und/oder greifen am offenen Schlitzende an den Schlitzkanten an. Das Verschließen bzw. nahezu erfolgende Verschließen ermöglicht es, bei großer Schlitzweite auch dünne Befestigungsschrauben oder Nägel zu verwenden, ohne daß die Gefahr besteht, daß die Distanzscheibe herunter fällt. Die Anordnung der Federzungen am offenen Schlitzende erleichtert große Federwege der Federzungen, die besonders dann notwendig sind, wenn die Schlitzweite groß und durch die Federzungen verschlossen ist.

Der Haltevorsprung kann ein in die Distanzscheibe eingesetztes seperates Federteil und als solches z. B. der besonderen Formgebung des Befestigungsmittels angepaßt sein. Das Federteil ermöglicht große Federwege, was insbesondere bei starrem Kunststoff bzw. dicker Distanzscheibe von Vorteil sein kann.

Um eine Distanzscheibe bei beengten Raumverhältnissen zwischen zwei Bauteile stecken zu können, ist in einer Außenkante, vorzugsweise gegenüber dem Schlitz, ein Schraubenziehereinsteckschlitz vorhanden. Infolgedessen kann die Distanzscheibe mit einem Schraubenzieher auch in einen schmalen Spalt eingeführt und auf eine diesen quer durchsetzende Schraube gesteckt werden, wenn der Spalt für die Finger oder die Hand der betreffenden Person zu schmal ist.

Insbesondere dicke Distanzscheiben sind ein- oder beidseitig gerippt. Die Rippung erspart Werkstoff und macht die Distanzscheibe leichter und damit besser handhabbar. Ist eine Anlagefläche der Distanzscheibe rauh, besteht sie also beispielsweise aus Putz, so können sich die Rauhigkeiten in die Räume zwischen die Rippen der Distanzscheibe drücken, wodurch die Befestigungskräfte verringert bzw. der Sitz der Distanzscheibe an der Putzfläche durch entsprechende Reibungshaftung verbessert wird.

Um im Bereich einer Nagelung auch noch nach einem Anordnen einer Distanzscheibe nageln zu können, besteht die Distanzscheibe aus nagelbarem Kunststoff. Dazu erhält der z. B. aus Polyvinylchlorid bestehende Kunststoff einen erhöhten Weichmacheranteil, der ein Zerplatzen der Distanzscheibe verhindert.

Die Distanzscheibe ist an ihren schlitzabgelegenen Ecken abgerundet. Die Abrundung der schlitzabgelegenen Ecken erspart Werkstoff, hat aber vor allem den Vorteil, daß der Schwerpunkt in Bezug auf das Schlitzende vergleichsweise tief liegt bzw. die Distanzscheibe bei gleicher Relativlage von Plattenschwerpunkt und Schlitzende mit einer vergleichsweisen kurzen Schlitzlänge auskommt.

Die Erfindung wird anhand von in der Zeichnung dargestellten Ausführungsbeispielen erläutert. Es zeigt:

Figur 1 eine Aufsicht auf eine Abstützfläche einer Distanzscheibe gemäß der Erfindung,

Figur 2 eine Kantenansicht in Richtung A der Fig. 1.

Figur 3 bis 8 besondere Ausbildungsformen eines Schlitzes einer Distanzscheibe, und

Fig. 9 eine Aufsicht analog Fig. 1

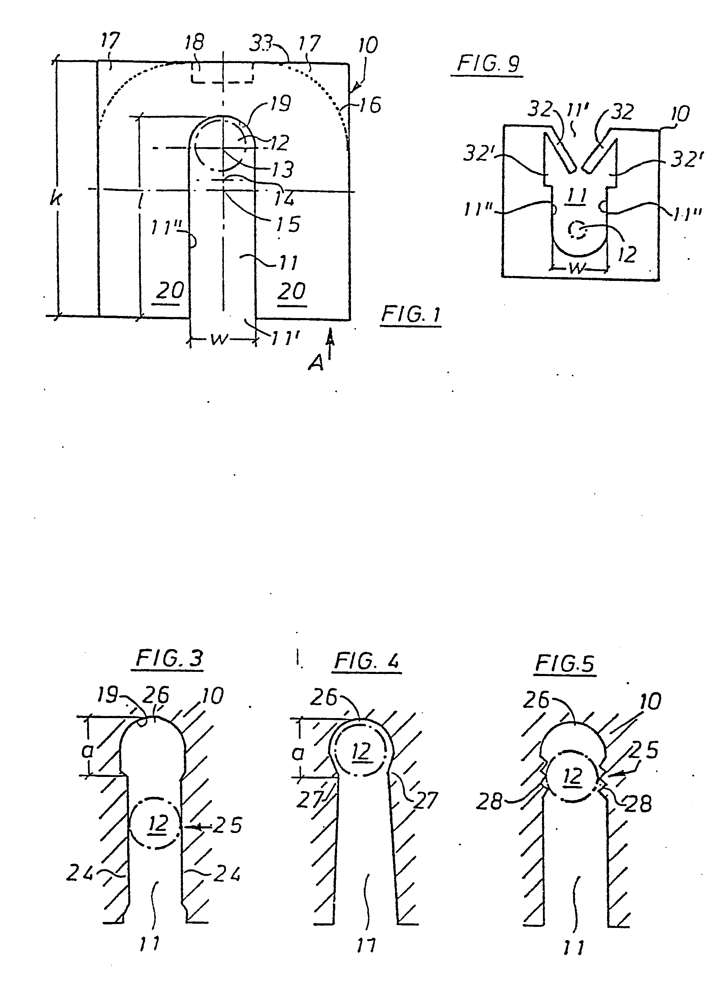

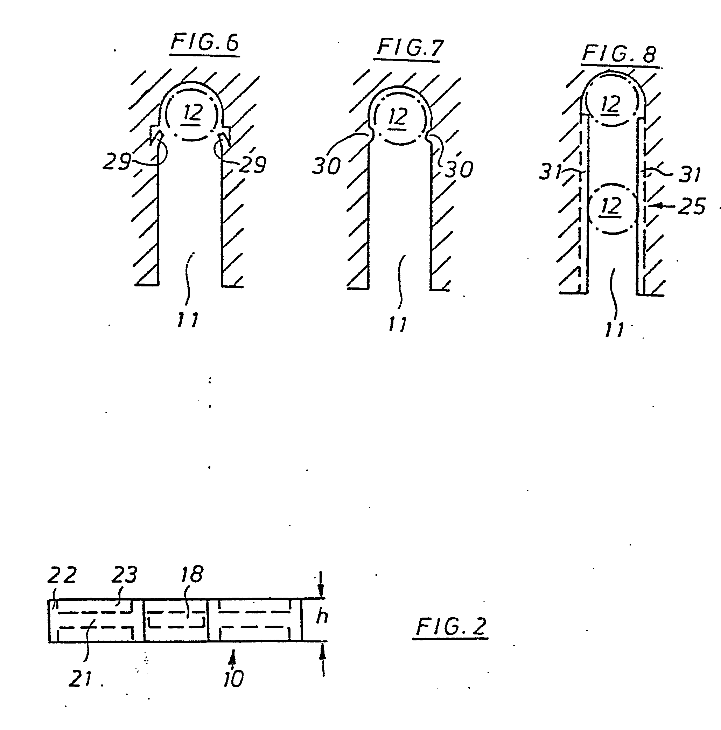

Die in Fig. 1 dargestellte Distanzscheibe 10 ist quadratisch. Sie ist außerdem plattenförmig, d. h. ihre Höhe h gemäß Fig. 2 ist im Vergleich zur Kantenlänge k gering.

Die Distanzscheibe 10 hat einen Schlitz 11 mit der Schlitzweite w und der Schlitzlänge 1. Die Schlitzweite w ist so bemessen, daß die Distanzscheibe 10 mit dem Schlitz 11 auf ein nicht näher dargestelltes Befestigungsmittel geschoben werden kann, das in Fig. 1 strichpunktiert als kreisrund angedeutet ist und den Querschnitt einer Befestigungsschraube 12 darstellen soll. Hierzu ist die Schlitzwand 19 im Bereich der Befestigungsschraube 12 halbkreisförmig ausgebildet. Eine davon abweichende Gestaltung ist jedoch möglich.

Durch den Schlitz 11 liegt der Schwerpunkt 14 der Distanzscheibe 10 etwas oberhalb ihres geometrischen Mittelpunkts 15. Dies wird durch die etwas größere Masse der oberen Hälfte der Distanzscheibe 10 bedingt. Will man erreichen, daß der Schwerpunkt 14 mit dem Mittelpunkt 15 zusammenfällt, muß diese Masse der oberen Hälfte der Distanzscheibe 10 verringert werden, z. B. durch die gepunktet dargestellte Abrundung 16 der schlitzabgelegenen Ecken 17. Das Zusammenfallen des Schwerpunkts 14 mit dem Mittelpunkt 15 hat den Vorteil, daß gefühlsmäßig besser gearbeitet werden kann, z. B. wenn schnell gearbeitet wird und dabei die Distanzscheibe 10 nur entsprechend der Hälfte ihrer Kantenlänge k aufgeschoben wird, anstatt sie etwas weiter entsprechend der Entfernung ihres Schwerpunktes 14 vom Schlitzanfang 11' aufzuschieben, wenn der Schwerpunkt 14 und der Mittelpunkt 15 nicht zusammenfallen.

Das Einsetzen einer Distanzscheibe 10 in einen Spalt wird durch einen Schraubenziehereinsteckschlitz 18 erleichtert, in den die Schneide eines Schraubenziehers eingesetzt wird, so daß die Distanzscheibe 10 mit letzterem statt mit den Händen in den schmalen Spalt eingebracht werden kann.

Der Radiusmittelpunkt 13 der halbkreisförmigen Schlitzwand 19 bzw. die Achse der Befestigungsschraube 12 liegt vom Schlitzanfang 11' weiter entfernt, als der Plattenschwerpunkt 14. Die Distanzscheibe 10 kann so weit auf die Befestigungsschraube 12 horizontal aufgeschoben werden, daß der Radiusmittelpunkt 13 jenseits des Plattenschwerpunkts 14 zu liegen kommt, wenn die Befestigungsschraube 12 an die halbkreisförmige Schlitzwand 19 des Längsschlitzes 11 anstößt. Wird die Distanzscheibe 10 dann losgelassen, schwenken die äußeren Enden 20 der U-förmigen Distanzscheibe 10 in ihre tiefste Lage und die Distanzscheibe 10 hängt an der Befestigungsschraube 12, ohne abrutschen zu können.

In Fig. 2 ist dargestellt, daß die Distanzscheibe 10 bei größeren Höhen h gerippt ausgebildet ist. Der Plattenkörper selbst besteht aus einer vergleichsweise dünnwandigen Mittelplatte 21, die einseitig oder gemäß Fig. 2 auf beiden Seiten vorspringende Stege 22 und Rippen 23 aufweist, welche an den Abstützflächen der auf Distanz zu haltenden Bauteile zur Anlage kommen, sofern nicht Vorsprünge dieser Anlageflächen, beispielsweise Putzrauhigkeiten, zwischen die Stege 22 und Rippen 23 greifen.

Die Distanzscheiben 10 der Fig. 3 bis 8 weisen Haltevorsprünge unterschiedlicher Ausgestaltung auf. Die Haltevorsprünge 24 sind beidseitig in den Schlitz 11 vorspringende Leisten und bilden über ihre Länge Klemmstellen 25 für eine Befestigungsschraube 12, so daß die Distanzscheibe 10 in mehrere Lagen gebracht werden kann. Die Distanzscheibe 10 klemmt auf der Befestigungsschraube 12, fest und behält die beim Aufstecken gegebene Lage bei. Die Haltevorsprünche 24 weisen Abstand a vom Schlitzende 26 auf, der so groß bemessen ist, daß die Befestigungsschraube 12 ohne Klemmung im Schlitz 11 liegt, so daß die Distanzscheibe 10 entsprechend beweglich ist, ohne daß jedoch die Distanzscheibe 10 von der Befestigungsschraube 12 herabfallen könnte. Letzteres ist auch bei der Gestaltung des Schlitzes 11 gemäß Fig. 4 der Fall, deren Haltevorsprünge 27 ebenfalls mit Abstand a zum Schlitzende 26 angeordnet sind und lediglich das Herabfallen der Distanzscheibe von einer Befestigungsschraube 12 gewährleisten, nicht aber deren Klemmung auf der gesamten Schlitzlänge.

Die Haltevorsprünge 28 der Distanzscheibe 10 gemäß Fig. 5 klemmen eine Befestigungsschraube 12 an einer bestimmten Stelle kurz vor dem Schlitzende 26.

Die Haltevorsprünge 29, 30, 31 der Distanzscheiben 10 der Fig. 6 bis 8 gewährleisten demgegenüber jeweils eine relativbewegliche Lage der Befestigungsschraube 12 im Schlitz 11, wobei die Haltevorsprünge 29 federartig ausgebildet sind, um das Einschieben der Befestigungsschraube 12 bzw. das Aufschieben der Distanzscheibe 10 auf eine Befestigungsschraube 12 zu erleichtern, während bei der Distanzscheibe der Fig. 7 nockenartige Haltevorsprünge 30 in den Schlitz 11 hineinragen und dabei eine besonders einfache Ausführungsform bilden. Die Haltevorsprünge 31 der Distanzscheibe gemäß Fig. 8 sind ähnlich den Haltevorsprüngen 24 über praktisch die gesamte Länge des Schlitzes 11 ausgebildet. Sie sind jedoch nicht über die gesamte Höhe h der Distanzscheibe 10 an den Schlitzkanten 11" vorhanden, sondern nur über einen Teil derselben, so daß sie beim Aufstecken der Distanzscheibe auf eine Befestigungsschraube 12 leichter ausweichen können und so das Aufschieben erleichtern.

Die Distanzscheibe 10 der Fig. 9 hat einen Schlitz 11 mit ähnlich Fig. 6 hineinragenden Federzungen 32, die am Schlitzanfang 11' an den Schlitzkanten 11" der Distanzscheibe 10 angreifen. Sie verschließen den Schlitz 11 nahezu, so daß auch eine kleine Befestigungsschraube 12 nicht aus dem weiten Schlitz 11 herausrutschen kann und die Distanzscheibe 10 infolgedessen herunterfällt. Die Federzungen 32 bilden mit ihren einander zugewandten Seiten einen Einlauftrichter und weichen in die Ausnehmungen 32' zurück, wenn die Distanzscheibe 10 auf die Befestigungsschraube 12 aufgeschoben wird. Die Ausnehmungen 32' sind so ausgebildet, daß der Durchmesser der Befestigungsschraube 12 praktisch gleich der Schlitzweite w des Schlitzes 11 sein kann, ohne daß die Federzungen 32 das Aufschieben der Di-stanzscheibe 10 unüberwindbar behindern. Nach dem Aufschnappen der Distanzscheibe 10 auf die Befestigungsschraube 12, was mit einer entsprechenden Geräuschbildung verbunden ist, weiß der Benutzer der Distanzscheibe 10, daß diese ihre Montagelage erreicht hat.

**Patentansprüche**

1. Plattenförmige ebene Distanzscheibe (10) für die Bauindustrie, mit einem einseitig offenen Schlitz (11), der sich von seinem offenen Schlitzanfang (11') bis über den Plattenmittelpunkt (15) hinaus erstreckt und mit seinem Schlitzende (26) eine Befestigungsschraube (12) od. dgl. klemmfrei umgibt, dadurch gekennzeichnet, daß die aus Kunststoff bestehende Distanzscheibe (10) mindestens einen elastischen Haltevorsprung (24, 27 bis 32) aufweist, der in den Schlitz (11) hineinragt und mit die Klemmfreiheit der Befestigungsschraube (12) gewährenden Abstand (a) vor dem Schlitzende (26) angeordnet ist.

2. Distanzscheibe nach Anspruch 1, dadurch gekennzeichnet, daß der oder die Haltevorsprünge (24, 27 bis 32) einstückig mit der Distanzscheibe (10) an den Schlitzkanten (11'') angeordnet sind.

3. Distanzscheibe nach Anspruch 1 oder 2, dadurch gekennzeichnet, daß der oder die Haltevorsprünge (29, 32) Federzungen sind, die beim Aufschieben der Distanzscheibe (10) auf die Befestigungsschraube (12) in Ausnehmungen (32') zurückfedern, die in den Schlitzkanten (11'') vorhanden sind.

4. Distanzscheibe nach Anspruch 3, dadurch gekennzeichnet, daß die als Federzungen ausgebildeten Haltevorsprünge (29, 32) den Schlitz (11) zumindestens nahezu verschließen und/oder am offenen Schlitzanfang (11') an den Schlitzkanten (11'') angreift.

5. Distanzscheibe nach einem der Ansprüche 1 bis 4, dadurch gekennzeichnet, daß der oder die Haltevorsprünge von einem in die Distanzscheibe eingesetzten separaten Federteil gebildet sind.

6. Distanzscheibe nach einem der Ansprüche 1 bis 5, dadurch gekennzeichnet, daß der oder die Haltevorsprünge (24, 28, 31) als punktweise oder sich im wesentlichen über die gesamte Schlitzlänge (1) erstreckende Klemmstellen (25) ausgebildet sind.

7. Distanzscheibe nach einem der Ansprüche 1 bis 6, dadurch gekennzeichnet, daß in einer Außenkante (33), vorzugsweise gegenüber dem Schlitz (11) ein Schraubenziehereinsteckschlitz (18) vorhanden ist.

8. Distanzscheibe nach einem der Ansprüche 1 bis 7, dadurch gekennzeichnet, daß sie ein oder beidseitig gerippt ist.

9. Distanzscheibe nach einem der Ansprüche 1 bis 8, dadurch gekennzeichnet, daß sie aus nagelbarem Kunststoff besteht.

10. Distanzscheibe nach einem der Ansprüche 1 bis 9, dadurch gekennzeichnet, daß ihre schlitzabgelegenen Ecken (17) abgerundet sind.

**Claims**

1. Plate-like flat spacer (10) for the building industry, with a slot (11) which is open to one side, which extends from its open slot entry beyond the centrepoint (15) of the plate, and which at its slot end (26) encloses a fastening screw (12) or the like without gripping it, characterised in that the spacer (10), made of plastics material, has at least one resilient retaining projection (24, 27 to 32) which protrudes into the slot (11) and is arranged at a distance (a) in front of the slot end (26) allowing the fastening screw (12) to locate at said slot end without being gripped.

2. Spacer according to claim 1, characterised in that the or each retaining projection (24, 27 to 32) is an integral part of the spacer (10) at the slot sides (11'').

3. Spacer according to claim 1 or 2, characterised in that the or each retaining projection (29, 32) is a springy tongue which, when the spacer (10) is pushed on to the fastening screw (12), deflects back into a recess (32') provided in the slot side (11'').

4. Spacer according to claim 3, characterised in that the or each retaining projection (29, 32) formed as a springy tongue at least approximately closes off the slot (11) and/or acts from the slot side (11'') at the open slot entry (11').

5. Spacer according to one of claims 1 to 4, characterised in that the or each retaining projection is formed by a separate spring element set into the spacer.

6. Spacer according to one of claims 1 to 5, characterised in that the or each retaining projection (24, 28, 31) is formed as a point gripping zone or as a gripping zone (25) which extends substantially the full length (1) of the slot.

7. Spacer according to one of claims 1 to 6, characterised in that a push-in slot (18) for a screwdriver is provided in an outer wall (33) of the spacer, preferably opposite the slot (11).

8. Spacer according to one of claims 1 to 7, characterised in that it is ribbed on one or both faces.

9. Spacer according to one of claims 1 to 8, characterised in that it is made of nailable plastics material.

10. Spacer according to one of claims 1 to 9, characterised in that its corners (17) remote from the open slot entry are rounded off.

## Revendications

1. Pièce d'écartement plane en forme de plaque (10) pour l'industrie du bâtiment, comportant une fente (11) ouverte d'un côté, fente qui s'étend depuis son amorce de fente ouverte jusqu'au-delà du point central (15) de la plaque et qui, par son extrémité (26), entoure, sans la serrer, une vis de fixation (12) ou un organe analogue, caractérisée en ce que la pièce d'écartement (10), qui se compose de matière plastique, présente au moins une saillie d'arrêt élastique (24, 27 à 32), qui pénètre dans la fente (11) et qui est disposée en avant de l'extrémité (26) de la fente en en étant séparée d'une distance (a) garantissant l'absence de serrage de la vis de fixation (12).

2. Pièce d'écartement selon la revendication 1, caractérisée en ce que la ou les saillies d'arrêt (24, 27 à 32) sont formées en une seule pièce avec la pièce d'écartement (10), sur les bords (11") de la fente.

3. Pièce d'écartement selon la revendication 1 ou 2, caractérisée en ce que la ou les saillies d'arrêt (29, 32) sont des languettes élastiques qui, lors de l'engagement de la pièce d'écartement (10) sur la vis de fixation (12), sont rabattues élastiquement dans des découpes (32') qui sont ménagées dans les bords (11") de la fente.

4. Pièce d'écartement selon la revendication 3, caractérisée en ce que les saillies d'arrêt (29, 32), réalisées sous la forme de languettes élastiques, obturent au moins presque totalement la fente (11) et/ou prennent naissance sur les bords (11") de la fente, au niveau de l'extrémité ouverte (11') de la fente.

5. Pièce d'écartement selon l'une des revendications 1 à 4, caractérisée en ce que la ou les saillies d'arrêt sont constituées par un élément élastique séparé, inséré dans la pièce d'écartement.

6. Pièce d'écartement selon l'une des revendications 1 à 5, caractérisée en ce que la ou les saillies d'arrêt (24, 28, 31) sont réalisées sous la forme de zones de serrage (25) ponctuelles ou s'étendant sur sensiblement toute la longueur (l) de la fente.

7. Pièce d'écartement selon l'une des revendications 1 à 6, caractérisée en ce qu'une fente (18) d'insertion d'un tourne-vis est ménagée dans un bord extérieur (33), de préférence à l'opposé de la fente (11).

8. Pièce d'écartement selon l'une des revendications 1 à 7, caractérisée en ce qu'elle est cannelée sur une face ou sur les deux.

9. Pièce d'écartement selon l'une des revendications 1 à 8, caractérisée en ce qu'elle est composée d'une matière plastique apte à être pénétrée par des clous.

10. Pièce d'écartement selon l'une des revendications 1 à 9, caractérisée en ce que ses coins (17), situés à l'écart de la fente, sont arrondis.

FIG. 9

FIG. 1

FIG. 3

FIG. 4

FIG. 5

1

FIG.6

FIG.7

FIG.8

FIG. 2